# EUROPÄISCHE PATENTANMELDUNG

(11) **EP 2 163 443 A2**
(43) Veröffentlichungstag der Anmeldung: **17.03.2010**
(21) Anmeldenummer: 09170311.6
(22) Anmeldetag: 15.09.2009
(51) Int. Cl.: B60S 3/04, B60S 3/06

(54) **Portalwaschanlage und Verfahren zum Waschen von Kraftfahrzeugen in einer derartigen Portalwaschanlage**

(30) Priorität: 15.09.2008 DE 102008042119
(71) Anmelder: Otto Christ AG, 87700 Memmingen (DE)
(72) Erfinder: Christ, Markus, 87700, Memmingen (DE)
(74) Vertreter: Peckmann, Ralf

(57) **Zusammenfassung**

Die vorliegende Erfindung betrifft eine Portalwaschanlage (1) für Kraftfahrzeuge (6), mit einem relativ zu dem zu waschenden Kraftfahrzeug (6) verfahrbaren Portalrahmen (2), mindestens einer seitlichen Waschbürste (4; 4"), und mindestens einer seitlichen, an dem Portalrahmen (2) angebrachten Hochdruckwasser-Düseneinrichtung (7), wobei die mindestens eine seitliche Hochdruckwasser-Düseneinrichtung (7) in Vorwärtslaufrichtung des Portalrahmens (2) gesehen vor der mindestens einen seitlichen Waschbürste (4) an dem Portalrahmen (2) angebracht ist, und wobei die mindestens eine seitliche Hochdruckwasser-Düseneinrichtung (7) mindestens eine oszillierende Hochdruck-Punktstrahldüse (10) aufweist. Ferner betrifft die vorliegenden Erfindung ein Verfahren zum Waschen von Kraftfahrzeugen (6) in einer derartigen Portalwaschanlage (1) .

## Beschreibung

Die vorliegende Erfindung bezieht sich auf eine Portalwaschanlage für Kraftfahrzeuge und auf ein Verfahren zum Waschen von Kraftfahrzeugen in einer derartigen Portalwaschanlage.

Neben den Autowaschanlagen vom Durchfahr-Typ sind Portalwaschanlagen bekannt, bei welchen das zu waschende Fahrzeug im Standzustand die Autowäsche erfährt. Bei einer der Anmelderin bekannten Portalwaschanlage wird ein Portalrahmen zunächst in einer Vorwärtslaufrichtung über das stehende Kraftfahrzeug unter Inbetriebnahme von unter anderem seitlichen Flachstrahldüsen vorgewaschen. Hierbei sind die seitlichen Flachstrahldüsen im Inneren des Portalrahmens zwischen einzelnen Bürsteneinrichtungen in etwa mittig vorgesehen. Anschließend wird der Portalrahmen in einem Rückkehrlauf erneut über das Kraftfahrzeug bewegt, wobei die einzelnen Waschbürsten eine Bürstenwäsche des bereits vorgewaschenen Fahrzeuges durchführen. Dies garantiert eine Lange Lebensdauer der Waschbürsten, welche nicht gegeben wäre für den Fall, dass die Waschbürsten bereits im ersten Vorwärtslauf und somit aufgrund der Anbringung vor den Flachstrahldüsen vor der Vorwäsche auf die stark verschmutzten Bereiche des Fahrzeuges einwirken würden. Ferner ist es bei dieser bekannten Portalwaschanlage danach notwendig, den Portalrahmen ein weiteres Mal in zumindest einem erneuten Vorwärtslauf über das zu waschende Fahrzeug hinwegzubewegen, um mit vorgesehenen Trocknungseinrichtungen ein Trocknen des Fahrzeugs zu bewerkstelligen.

An diesem Stand der Technik hat sich jedoch die Tatsache als nachteilig herausgestellt, dass selbst bei dem einfachsten, auszuwählenden Waschprogramm der Portalrahmen mehrere Vorwärts- bzw. Rückkehrläufe ausführen muss.

Des Weiteren hat sich an diesem Ansatz herausgestellt, dass die Flachstrahldüsen in nachteiliger Weise zum Erreichen einer wirkungsvollen Schmutzentfernung relativ nahe an das Fahrzeug herangeführt werden müssen, so jedoch lediglich auf eine begrenzte Fläche der Karosserie des Fahrzeugs einwirken können. Andererseits reicht der Wasserdruck der Flachstrahldüsen bei der Anbringung der Düsen in einem größeren Abstand vom Kraftfahrzeug zur Vergrößerung der Wirkfläche nicht aus, um die gewünschte Schmutzentfernung zu erzielen.

Der vorliegenden Erfindung liegt daher die Aufgabe zugrunde, eine verbesserte Portalwaschanlage sowie ein verbessertes Verfahren zum Waschen von Kraftfahrzeugen in einer Portalwaschanlage bereitzustellen, durch welche insbesondere die Anzahl der notwendigen Läufe des Portalrahmens über das zu waschende Fahrzeug verringert sowie die Waschqualität und die Lebensdauer der Portalwaschanlage erhöht werden

Diese Aufgabe wird erfindungsgemäß durch die Portalwaschanlage mit den Merkmalen des Patentanspruchs 1 sowie durch das Verfahren mit den Merkmalen des Patentanspruchs 20 gelöst.

Die der vorliegenden Erfindung zugrundeliegende Idee besteht darin, an dem relativ zu dem zu waschenden Kraftfahrzeug verfahrbaren Portalrahmen mindestens eine seitliche Hochdruckwasser-Düseneinrichtung anzubringen, wobei die mindestens eine seitliche Hochdruckwasser-Düseneinrichtung in Vorwärtslaufrichtung des Portalrahmens gesehen zumindest vor den seitlichen Waschbürsten an dem Portalrahmen angebracht ist und wobei die mindestens eine seitliche Hochdruckwasser-Düseneinrichtung mindestens eine oszillierende Hochdruck-Punktstrahldüse aufweist.

Dadurch weist die vorliegende Erfindung gegenüber dem oben angegebenen bekannten Ansatz den Vorteil auf, dass in einem Vorwärtslauf des Portalrahmens eine Vorwäsche mittels Hochdruck-Punktstrahldüsen durchgeführt wird, die aufgrund der oszillierenden Arbeitsweise eine vergrößerte Wirkfläche der Fahrzeugkarosserie abdecken und aufgrund der Ausbildung als Punktstrahldüsen auch in einem relativ großen Abstand zur Karosserie noch einen genügend großen Wasserdruck für eine optimale Säuberung des Fahrzeuges erzeugen. Die der Hochdruckwasser-Düseneinrichtung nachgeschalteten Bürsten können vorteilhaft in dem selben Vorwärtslauf betrieben werden. Somit kann die Anzahl der notwendigen Portalrahmenläufe und die Wartezeit der Kunden verringert und der Durchfluss bzw. die Leistungsfähigkeit der Portalwaschanlage in vorteilhafter Weise erhöht werden. Des Weiteren werden die Waschbürsten aufgrund der Vorreinigung durch die seitlichen Hochdruckwasser-Düseneinrichtungen nicht wesentlich verschmutzt. Folglich wird die Lebensdauer der einzelnen Bürsten und somit der gesamten Portalwaschanlage erhöht.

In den Unteransprüchen finden sich vorteilhafte Ausgestaltungen und Verbesserungen der im Patentanspruch 1 angegebenen Portalwaschanlage bzw. des im Patentanspruch 20 angegebenen Verfahrens.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische Vorderansicht einer Portalwaschanlage gemäß einem bevorzugten Ausführungsbeispiel der vorliegenden Erfindung;
- Fig. 2: eine Vorderansicht der Portalwaschanlage aus Fig. 1;
- Fig. 3: eine schematische Längsschnittansicht der Portalwaschanlage gemäß den Figuren 1 und 2;
- Fig. 4: eine Draufsicht auf die Portalwaschanlage gemäß den Figuren 1 bis 3;
- Fig. 5: eine schematische Schnittansicht einer seitlichen Hochdruckwasser-Düseneinrichtung gemäß einem bevorzugten Ausführungsbeispiel der vorliegenden Erfindung;
- Fig. 6: eine schematische Perspektivansicht von zwei seitlichen und einer horizontalen Hochdruckwasser-Düseneinrichtungen in oszillierender Arbeitsweise gemäß einem bevorzugten Ausführungsbeispiel der vorliegenden Erfindung;
- Fig. 7.1 bis 7.5: schematische Darstellungen der einzelnen Verfahrensschritte eines Waschvorgangs eines Kraftfahrzeuges in einer Portalwaschanlage gemäß einem bevorzugten Ausführungsbeispiel der vorliegenden Erfindung.

In den Figuren der Zeichnung bezeichnen gleiche Bezugszeichen gleiche oder funktionsgleiche Komponenten, soweit nichts Gegenteiliges angegeben ist.

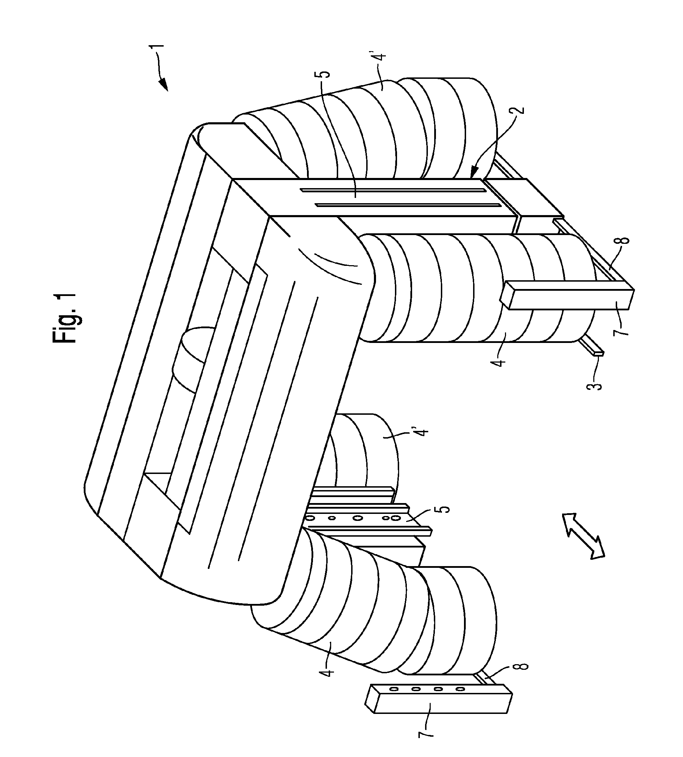

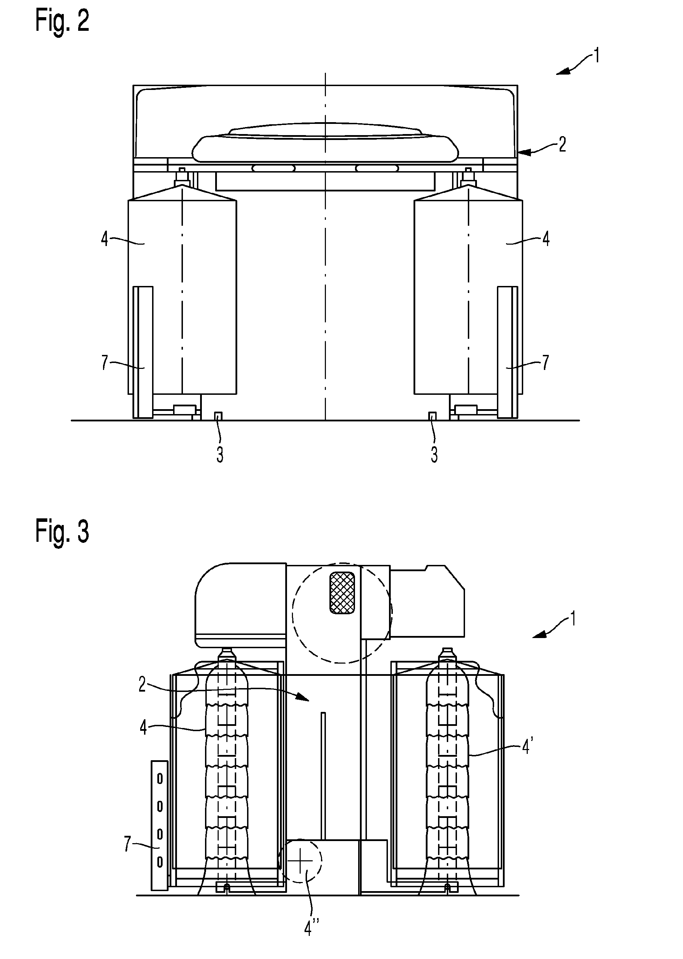

Im Folgenden wird eine Portalwaschanlage 1 gemäß einem bevorzugten Ausführungsbeispiel der vorliegenden Erfindung zunächst unter Bezugnahme auf die Fig. 1 bis 4 näher beschrieben. Die Portalwaschanlage 1 besteht gemäß dem vorliegenden Ausführungsbeispiel aus einem Portalrahmen 2, welcher mittels sich am Boden befindlichen Führungsschienen 3 in durch den Pfeil in Fig. 1 dargestellten Längsrichtungen mittels entsprechender Ansteuerung verfahrbar ist. Da es sich bei der Ansicht in Fig. 1 lediglich um eine schematische Ansicht handelt, wird lediglich eine Führungsschiene 3 in Fig. 1 der Übersichtlichkeit halber dargestellt. Es ist für einen Fachmann offensichtlich, dass mehrere Schienen zum Verfahren des Portalrahmens 2 in der Bodenfläche vorgesehen sein können.

Der Portalrahmen 2 weist unter anderem mehrere seitliche, in etwa vertikale Bürsten 4, 4' auf, welche einem seitliche Waschen des Kraftfahrzeuges dienen. Im dargestellten Ausführungsbeispiel weist der Portalrahmen 2 in jedem Seitenbereich eine vordere Bürste 4 und eine hintere Bürste 4' mit vertikalen Ausrichtungen sowie eine auf die Fahrzeugräder gerichtete Radwaschbürste 4" auf.

Zwischen den vorderen und hinteren Bürsten 4, 4' sind auf jeder Seite Portalrahmenträger 5 vorgesehen, in welchen beispielsweise die seitlichen Lufttrocknungseinrichtungen, zusätzliche Hochdruckwasser-Düseneinrichtungen, Einrichtungen zum Aufbringen von Detergentien, Einrichtungen zum Aufbringen von Wachsmitteln oder anderen Fahrzeugbehandlungsmitteln oder dergleichen vorgesehen sind.

Die in den Figuren dargestellte, beispielhafte Portalwaschanlage weist ferner neben den hier erläuterten Bauteilen zusätzliche, gängige Einrichtungen auf. Diese sind allerdings für den Gegenstand der vorliegenden Anmeldung von geringerer Bedeutung, so dass auf eine detaillierte Beschreibung dieser im Folgenden verzichtet wird.

Des Weiteren weist die Portalwaschanlage 1 gemäß dem vorliegenden Ausführungsbeispiel zwei, eine an jeder Seite des Portalrahmens 2 angebrachte Hochdruckwasser-Düseneinrichtungen 7 auf. Die Hochdruckwasser-Düseneinrichtungen 7 sind vorzugsweise jeweils über Horizontalstege 8 mit dem Portalrahmen 2 fest verbunden. Etwaige Zuleitungen, wie beispielsweise Wasserzuleitungen, Stromzuleitungen etc., verlaufen in diesen Horizontalstegen 8. Die Horizontalstege 8 sind ferner derart vorgesehen, dass sie etwas oberhalb der Bodenfläche verlaufen und bei einem Verfahren des Portalrahmens 2 synchron mit diesem verfahren werden. Ferner sind die Hochdruckwasser-Düseneinrichtungen 7 derart an den einzelnen Horizontalstegen 8 angebracht, dass auch die Hochdruckwasser-Düseneinrichtungen 7 etwas oberhalb der Bodenfläche angeordnet und in Längsrichtung von den vorderen Bürsten 4 geeignet beabstandet sind.

Wie in den Figuren, insbesondere in Fig. 1, ersichtlich ist, sind die beiden Hochdruckwasser-Düseneinrichtungen 7 als in etwa rechteckförmige, sich in horizontaler Richtung erstreckende Gehäusekästen ausgebildet und in Vorwärtslaufrichtung des Portalrahmens 2 (das entspricht in Fig. 1 der Richtung nach schräg links unten) vor den benachbarten vorderen Bürsten 4 angeordnet und von diesen derart beabstandet, dass die vorderen Bürsten 4 kollisionsfrei den entsprechenden Waschvorgang durchführen können.

Ferner sind die beiden Hochdruckwasser-Düseneinrichtungen 7 derart seitlich außenliegend an dem Portalrahmen 2 angebracht, dass ein Öffnen der Fahrzeugtüren des zu waschenden Fahrzeugs in der Ausgangsposition sowie in der Endposition der Portalwaschanlage 1 ohne Weiteres und insbesondere ohne einer Kollisionsgefahr zwischen den Hochdruckwasser-Düseneinrichtungen 7 und den Fahrzeugtüren möglich ist.

Die Höhe sowie der Abstand der Hochdruckwasser-Düseneinrichtungen 7 vom zugeordneten Boden und vom Fahrzeug ist vorzugsweise derart gewählt, dass ein vorbestimmter Oberflächenbereich des zu waschenden Fahrzeuges durch die Düseneinrichtungen 7 flächendeckend abgedeckt wird, insbesondere der Radbereich zusammen mit den Seitenkarosseriebereichen des Fahrzeugs.

Neben den in den Fig. 1 bis 4 dargestellten Bürsten 4, 4' sind, wie oben bereits angesprochen, zusätzlich vorzugsweise seitliche Radwaschbürsten 4" auf Höhe der Fahrzeugräder vorgesehen, die mit bestimmten Anstellwinkeln für hohe Flächenabdeckungen anstellbar sind. Diese Radwaschbürsten 4" sind beispielsweise in Vorwärtslaufrichtung des Portalrahmens 2 gesehen hinter den vorderen Bürsten 4 an dem Portalrahmen 2 angebracht. Es ist allerdings für einen Fachmann offensichtlich, dass die Anbringung der einzelnen Komponenten auch auf unterschiedliche Art und Weise vorgesehen werden kann, solange die Hochdruckwasser-Düsenrichtungen 7 vor den entsprechenden Bürsten in Vorwärtslaufrichtung des Portalrahmens 2 gesehen positioniert sind.

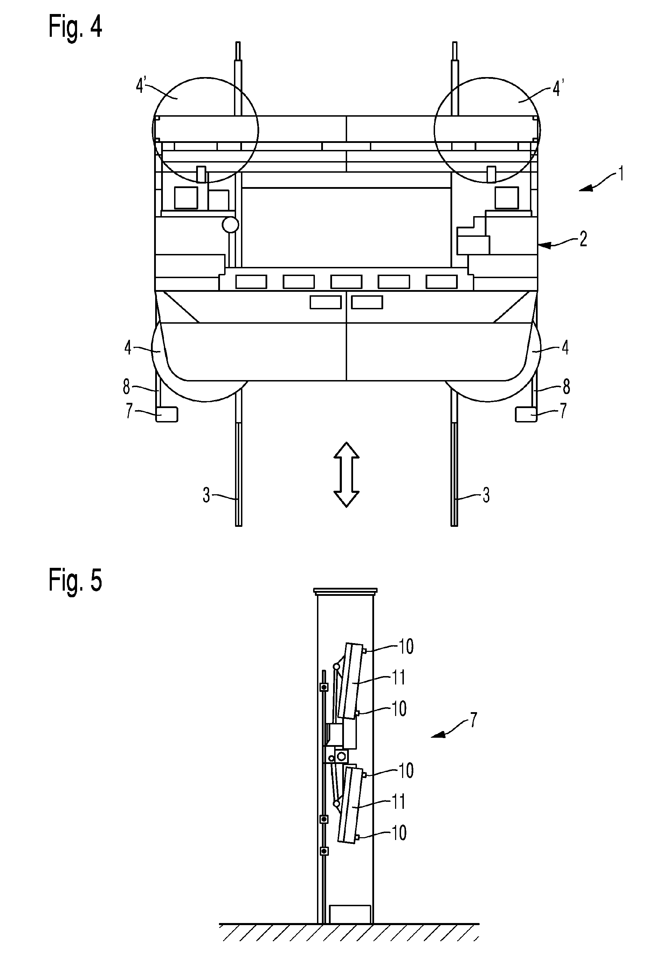

Fig. 5 illustriert eine Querschnittsansicht der linken, seitlichen Hochdruckwasser-Düseneinrichtung 7 aus Fig. 4 gemäß einem bevorzugten Ausführungsbeispiel der vorliegenden Erfindung.

Hiernach weist die Hochdruckwasser-Düseneinrichtung 7 exemplarisch insgesamt 4 Punktstrahldüsen 10 auf, welche jeweils paarweise an einem jeweils zugeordneten, verschwenkbaren Träger 11 angebracht sind. Die verschwenkbaren Träger 11 sind unabhängig voneinander oder vorzugsweise synchron zueinander in oszillierender Weise derart antreibbar bzw. ansteuerbar, dass die vier Punktstrahldüsen 10 während des Waschvorgangs in vertikaler Richtung oszillierend verschwenkt werden. Die Punktstrahldüsen 10 sind vorzugsweise direkt auf die zu säubernde Kraftfahrzeugkarosseriefläche bzw. Kraftfahrzeugräder ausgerichtet.

Um eine möglichst optimierte Flächenabdeckung während des Waschvorgangs zu erreichen, sind die vier Punktstrahldüsen 10 vorzugsweise gleichmäßig voneinander beabstandet, wie oben bereits erläutert synchron in oszillierender Weise ansteuerbar und in vorbestimmter Weise von den zu reinigenden Oberflächen des Fahrzeuges beabstandet ausgebildet. Für eine optimale Reinigungswirkung sind die Parameter Anzahl der Punktstrahldüsen, Abstand der einzelnen Punktstrahldüsen voneinander, Abstand der Punktstrahldüsen von der zu reinigenden Oberfläche, Arbeitsdruck der Punktstrahldüsen, Oszillationsfrequenz der Punktstrahldüsen, Schwenkwinkel der Punktstrahldüsen usw. entsprechend aufeinander abzustimmen und auszuwählen.

Gemäß einem bevorzugten Ausführungsbeispiel der vorliegenden Erfindung sind die vier, in vertikaler Richtung in Reihe angeordneten und gleichmäßig voneinander beabstandeten Punktstrahldüsen 10 in einem Abstand von in etwa 22,5 cm in dem Gehäuse der entsprechenden Düseneinrichtung 7 vorgesehen, wobei die Punktstrahldüsen 10 mit einem vorbestimmten Arbeitsdruck beispielsweise von in etwa zwischen 10-30 bar oder zwischen 50-60 bar, mit einem Gesamtschwenkwinkel von beispielsweise 26° in oszillierender Weise und jeweils mit einer Oszillationsfrequenz von etwas unter 2 Hz betrieben werden. Es ist allerdings für einen Fachmann offensichtlich, dass diese Angaben lediglich exemplarisch zu verstehen sind und dass die Werte dieser einzelnen Parameter und weiterer Parameter entsprechend dem jeweiligen Verwendungszweck bzw. den jeweiligen Kundenwünschen angepasst werden können. Durch Variation einzelner Werte kann beispielsweise die Flächenabdeckung sowie der Grad der Vorwäsche wunschgemäß eingestellt werden.

Die oszillierenden Punktstrahldüsen 10 sowie die entsprechenden Antriebe und Leitungen sind in dem in etwa rechteckförmigen Gehäuse der Hochdruckwasser-Düseneinrichtung 7 in derart geschützter Weise aufgenommen, dass einerseits die Komponenten während des Waschbetriebes vor Beschädigungen und andererseits sich etwaige, in der Waschanlage befindende Personen vor Verletzungen geschützt werden.

Es ist für einen Fachmann zudem offensichtlich, dass anstelle einer synchronen Ansteuerung aller Punktstrahldüsen 10 einer Düseneinrichtung 7 auch die paarweise an einem verschwenkbaren Träger 11 angebrachten Punktstrahldüsen 10 nicht synchronisiert zu den am anderen Träger 11 paarweise angeordneten Punktstrahldüsen 10 ansteuerbar sind. Eine entsprechende Modifikation der Antriebseinrichtungen ist für einen Fachmann allerdings hinreichend bekannt, so dass hierauf nicht weiter eingegangen wird.

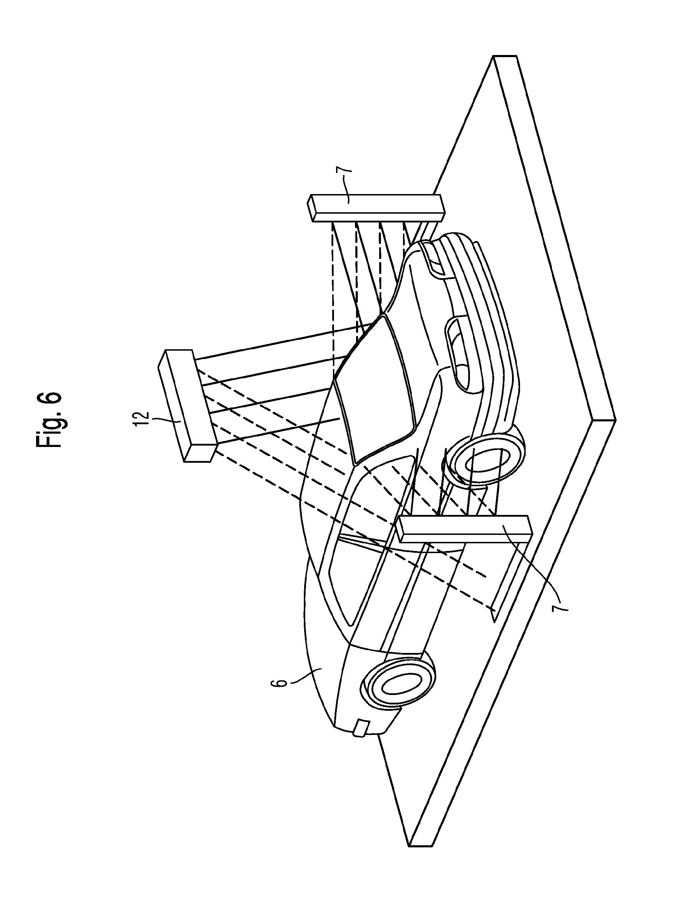

Fig. 6 illustriert eine schematische Perspektivansicht eines Fahrzeugs während des Waschvorgangs. Der Vollständigkeit halber sind lediglich die beiden seitlichen, in vertikaler Richtung ausgerichteten Hochdruckwasser-Düseneinrichtungen 7 sowie eine obere, in horizontaler Richtung ausgerichtete Hochdruckwasser-Düseneinrichtung 12, nicht jedoch die übrigen Komponenten der Portalwaschanlage 1 dargestellt. Durch die jeweils durchgezogenen bzw. gestrichelten Linien sind die vier oszillierenden Strahlengänge der einzelnen Punktstrahldüsen 10 jeder Düseneinrichtung 7 bzw. 12 angedeutet.

Wie in Fig. 6 ferner dargestellt ist, oszillieren die Punktstrahldüsen 10 der seitlichen Hochdruckwasser-Düseneinrichtungen 7 in vertikaler und die Punktstrahldüsen der horizontalen Hochdruckwasser-Düseneinrichtung 12 in horizontaler Richtung mit vorbestimmten Parametern.

Durch die oszillierende Ausgestaltung sowie die Ausbildung der Düsen als Hochdruckwasser-Punktstrahldüsen kann eine hohe Flächenabdeckung realisiert werden. Lediglich ergänzend sei darauf hingewiesen, dass die horizontal angeordnete Hochdruckwasser-Düseneinrichtung 12 im Allgemeinen konturenfolgend über das zu waschende Fahrzeug geführt wird, ebenfalls mit einer vorbestimmten Oszillationsfrequenz, einem vorbestimmten Schwenkwinkel etc..

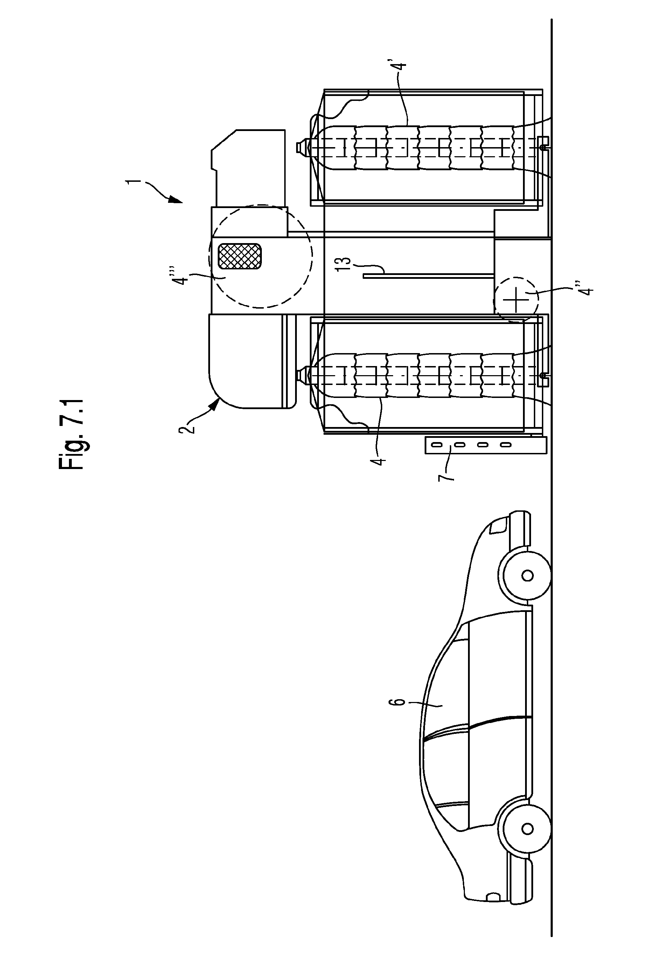

Anhand der Fig. 7.1 bis 7.5 wird im Folgenden ein Verfahrensablauf zum Waschen eines Kraftfahrzeuges 6 in einer Portalwaschanlage 1 gemäß einem bevorzugten Ausführungsbeispiel der vorliegenden Erfindung näher erläutert.

Zunächst wird in der Ausgangsposition das zu waschende Kraftfahrzeug 6 in der Portalwaschanlage 1 zwischen den beiden Führungsschienen 3 vor dem Portalrahmen 2 in vorbestimmter Art und Weise abgestellt, wie in Fig. 7.1 illustriert ist.

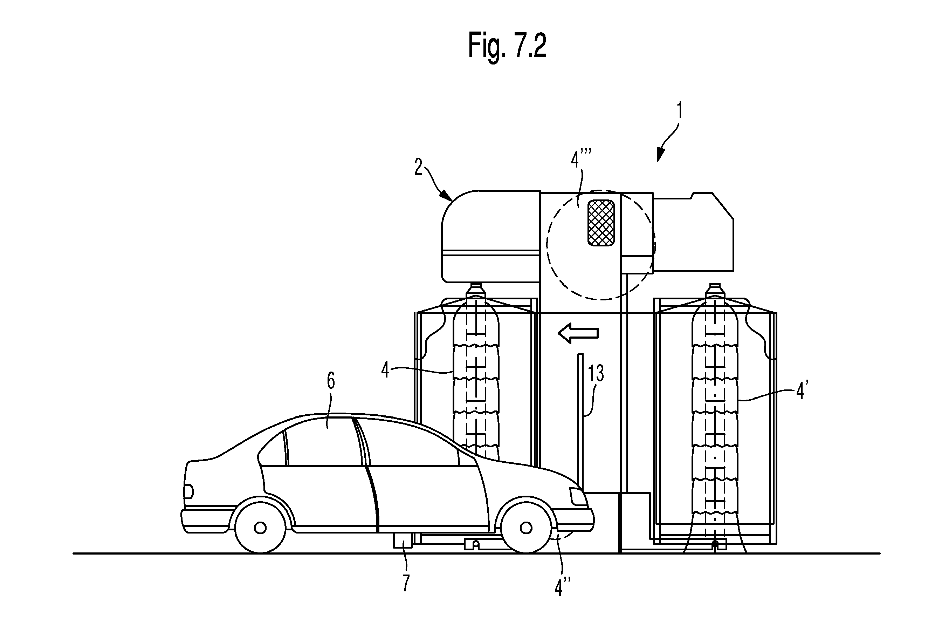

Anschließend wird der Portalrahmen 2 entlang den Führungsschienen 3 in Vorwärtslaufrichtung, d.h. in Richtung des in Fig. 7.2 dargestellten Pfeiles entlang des zu waschenden Fahrzeugs 6 verfahren. Hierbei werden unter anderem die beiden seitlichen Hochdruckwasser-Düseneinrichtungen 7 als auch die entsprechenden Bürsten 4, 4', 4'', 4''' betrieben, wobei die Bürste 4''' eine obere Waschbürste schematisch darstellt, welche beispielsweise konturenfolgend über das Fahrzeug mittels entsprechender Sensoren geführt wird.

Bei diesem Vorwärtslauf des Portalrahmens 2 gemäß Fig. 7.2 werden die Radbereiche sowie die Seitenkarosseriebereiche des Fahrzeugs 6 zunächst mittels der beiden seitlichen Hochdruckwasser-Düseneinrichtungen 7 entsprechend derart vorgereinigt, dass die nachfolgenden Bürsten während des selben Vorwärtslaufes einen Waschvorgang betreiben und eine optimale Reinigung des Fahrzeugs in lediglich einem Vorwärtslauf zeitsparend gewährleisten. Da die vorgeschalteten Hochdruckwasser-Düseneinrichtungen 7 insbesondere die grob verschmutzten Bereiche, wie insbesondere die Radbereiche des Fahrzeuges 6 vorreinigen, wird eine Verschmutzung der nachgeschalteten Bürsten zudem reduziert und somit die Lebensdauer der Bürsten vorteilhaft verlängert.

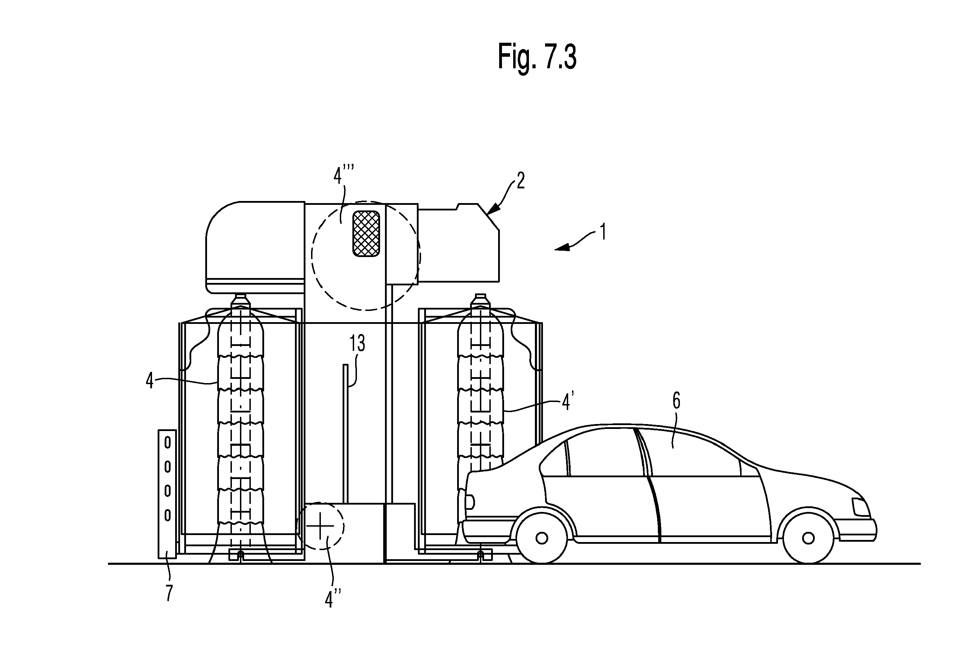

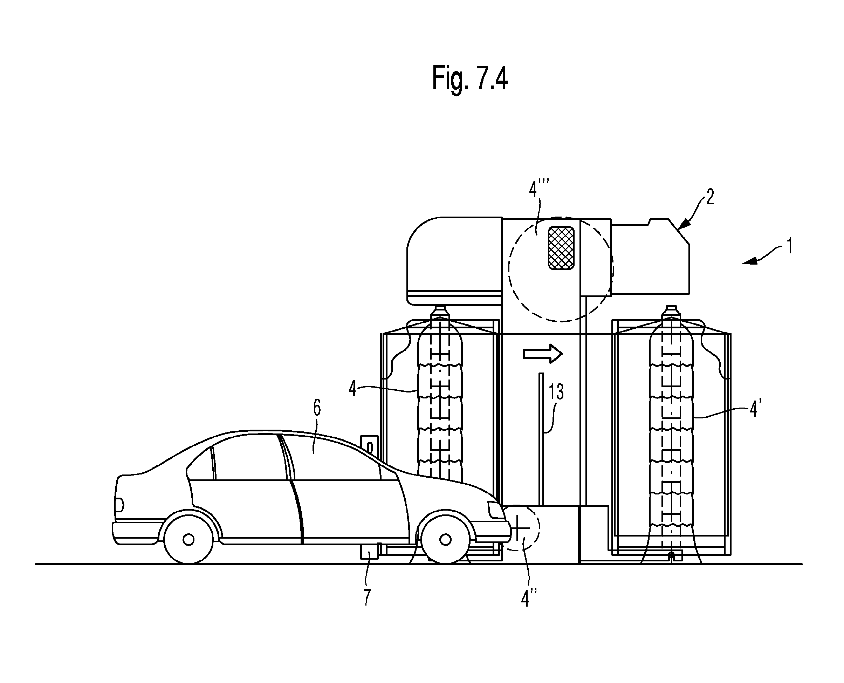

Nach Beendigung des Vorwärtslaufes, wie in Fig. 7.3 dargestellt, wird der Portalrahmen 2 in Rückkehrlaufrichtung gemäß dem in Fig. 7.4 dargestellten Pfeil entlang des Kraftfahrzeuges 6 zurückverfahren. Hierbei ist es beispielsweise bei einem Basiswaschprogramm lediglich erforderlich, das Fahrzeug 6 beim Rückkehrlauf mittels vorgesehener Lufttrocknungseinrichtungen 13 zu trocknen. An dieser Stelle sei angemerkt, dass in den Figuren lediglich schematisch eine vertikale Lufttrocknungseinrichtung dargestellt ist, wobei im Allgemeinen auch eine horizontale Lufttrocknungseinrichtung vorgesehen ist, die beim Rückkehrlauf konturenfolgend über das Fahrzeug zum Lufttrocknen desselben geführt wird.

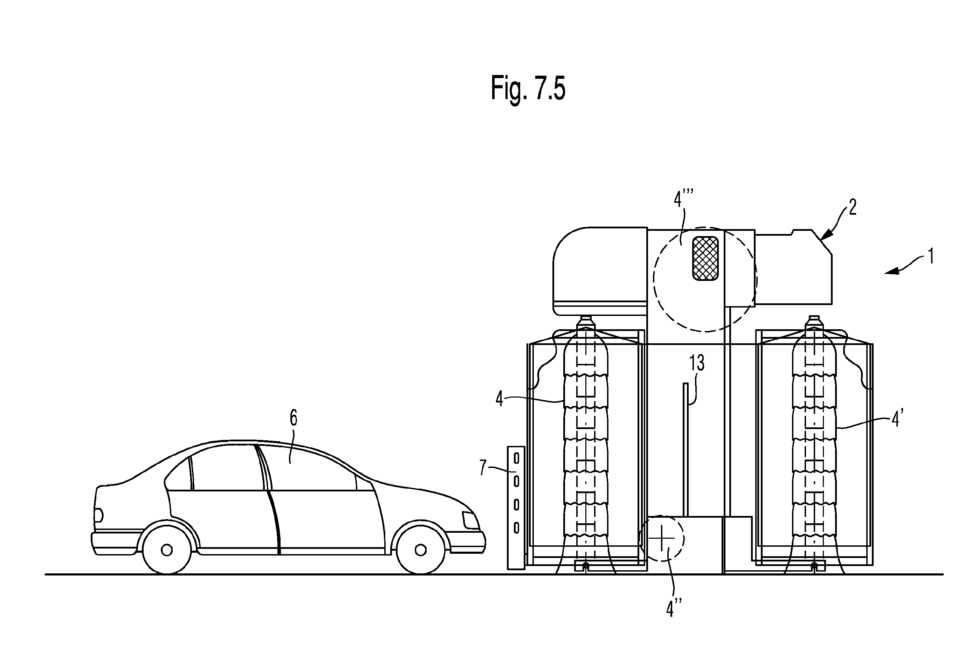

Nach Beendigung des Rückkehrlaufes befindet sich der Portalrahmen 2 wieder in seiner End- bzw. Ausgangsposition gemäß den Fig. 7.5 bzw. 7.1.

Somit ist aufgrund der vorgeschalteten Anbringung der Hochdruckwasser-Düseneinrichtungen 7 vor den nachfolgenden Waschbürsten eine Vorreinigung insbesondere der besonders stark verschmutzten Bereiche des Fahrzeugs derart gewährleistet, dass im gleichen Vorwärtslauf auch die Bürstenwäsche mittels der nachgeschalteten Waschbürsten 4, 4', 4'', 4''' möglich ist. Dadurch kann beispielsweise in einem Basisprogramm lediglich mittels eines einzigen Vorwärts- und Rückkehrlaufes gemäß den Fig. 7.1 bis 7.5 ein vollständiges Waschprogramm mitsamt Trocknung durchlaufen werden. Hierdurch werden vorteilhaft die jeweilige Programmablaufzeit in vorteilhafter Weise verringert und der Durchlauf bzw. die Leistung der Portalwaschanlage erhöht.

Selbstverständlich ist es auch denkbar, in dem oben beschriebenen Vorwärtslauf weitere Fahrzeugbehandlungsschritte zu integrieren, beispielsweise eine Schaumbehandlung mittels einer entsprechenden Schaumeinrichtung, eine Wachsbehandlung mittels einer Wachseinrichtung, eine Detergentienaufbringung mittels einer geeigneten Detergentieneinrichtung oder dergleichen.

Zudem ist es auch denkbar, neben dem oben beschriebenen Ablauf bei Bedarf weitere Vorwärts- und Rückkehrläufe vorzusehen, in denen alternative oder zusätzliche Behandlungsschritte mittels entsprechender Einrichtungen, wie beispielsweise den oben beschriebenen Schaumeinrichtungen, Wachseinrichtungen, Detergentieneinrichtungen oder dergleichen, durchgeführt werden.

Somit wird gewährleistet, dass die vertikale Hochdruckwasser-Düseneinrichtung sowie die horizontalen Hochdruckwasser-Düseneinrichtungen jeweils vor den entsprechenden zugeordneten horizontalen Bürsten bzw. vertikalen Waschbürsten zum Einsatz kommen, um den groben Schmutz vom zu waschenden Fahrzeug zu entfernen und derart das Behandlungsmaterial, beispielsweise die Waschbürsten selbst, die entsprechenden verwendeten Textilien oder etwaige geschäumte Materialien, vor einer Verschmutzung zu schützen. Dadurch verkürzt sich zum einen die Waschzeit, wodurch sich die Produktivität der gesamten Portalwaschanlage vorteilhaft erhöht. Des Weiteren setzen sich weniger Schmutzpartikel in den entsprechenden Bürstenwaschmaterialien fest, welche ansonsten zu einer Lackschädigung des zu waschenden Fahrzeuges beitragen würden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Insbesondere ist zu verstehen, dass lediglich die Komponenten der Portalwaschanlage gemäß dem beschriebenen Ausführungsbeispiel erläutert wurden, die für die Beschreibung der vorliegenden Erfindung als notwendig angesehen wurden. Es ist für einen Fachmann selbstverständlich, dass zusätzliche Antriebe, Bürsten, Fahrzeugbehandlungseinrichtungen etc. vorgesehen sein können, ohne den Schutzbereich der vorliegenden Erfindung zu verlassen.

Beispielsweise können in den seitlichen Hochdruckwasser-Düseneinrichtungen 7 weitere Fahrzeugbehandlungseinrichtungen vorgesehen sein. Zum Beispiel können Düsen zum Aufbringen von Detergentien, Wachs, Schaum oder dergleichen und/oder Düsen zur Lufttrocknung des Fahrzeuges in dem Gehäuse der einzelnen Hochdruckwasser-Düseneinrichtungen integriert sein. Hierbei kann ebenfalls eine entsprechende Oszillation der Düsen oder eine starre Ausgestaltung vorgesehen werden.

Es ist auch denkbar, die Düsen der Hochdruckwasser-Düseneinrichtungen als multifunktionale Düsen auszubilden, welche beispielsweise neben dem Aufbringen des Waschwassers im Vorwärtslauf als Düsen für die Lufttrocknung beim Rückkehrlauf dienen oder als Düsen zum Aufbringen eines weiteren Fahrzeugbehandlungsmittels.

### Weitere Ausführungsbeispiele sind nachfolgend angegeben:

Ausführungsbeispiel 1.: Die Portalwaschanlage weist zusätzlich mindestens eine horizontale Hochdruckwasser-Düseneinrichtung 12 auf, welche in Vorwärtslaufrichtung des Portalrahmens 2 gesehen vor der entsprechend zugeordneten horizontalen Waschbürste 4''' an dem Portalrahmen 2 angebracht ist.

Ausführungsbeispiel 2.: Die Portalwaschanlage nach Ausführungsbeispiel 1, wobei die mindestens eine horizontale Hochdruckwasser-Düseneinrichtung 12 ebenfalls mindestens eine oszillierende Hochdruck-Punktstrahldüse 10 aufweist.

### Bezugszeichenliste

- 1: Portalwaschanlage
- 2: Portalrahmen
- 3: Führungsschienen
- 4: vordere Bürsten
- 4': hintere Bürsten
- 4'': Radwaschbürsten
- 4''': obere Bürste
- 5: Portalrahmenträger
- 6: zu waschendes Kraftfahrzeug
- 7: Hochdruckwasser-Düseneinrichtung (vertikal)
- 8: Horizontalsteg
- 10: Hochdruck-Punktstrahldüse
- 11: verschwenkbarer Träger
- 12: Hochdruckwasser-Düseneinrichtung (horizontal)
- 13: Lufttrocknungseinrichtung

## Patentansprüche

1. Portalwaschanlage (1) für Kraftfahrzeuge (6), mit:
einem relativ zu dem zu waschenden Kraftfahrzeug (6) verfahrbaren Portalrahmen (2);
mindestens einer seitlichen Waschbürste (4; 4''); und
mindestens einer seitlichen, an dem Portalrahmen (2) angebrachten Hochdruckwasser-Düseneinrichtung (7),
**dadurch gekennzeichnet, dass**
die mindestens eine seitliche Hochdruckwasser-Düseneinrichtung (7) in Vorwärtslaufrichtung des Portalrahmens (2) gesehen vor dem Portalrahmen (2) angebracht ist, wobei die mindestens eine seitliche Hochdruckwasser-Düseneinrichtung (7) ein sich in vertikaler Richtung relativ zu dem Portalrahmen (2) erstreckendes Gehäuse, welches etwas oberhalb der von der Portalwaschanlage (1) zu überfahrenden Bodenfläche angeordnet und über einen im Bodenbereich vorgesehenen Horizontalsteg (8) mit dem Portalrahmen (2) fest verbunden ist, und mindestens eine oszillierende Hochdruck-Punktstrahldüse (10) aufweist.

2. Portalwaschanlage nach Anspruch 1, **dadurch gekennzeichnet, dass** die Portalwaschanlage (1) an jeder Seite des Portalrahmens (2) eine seitliche Hochdruckwasser-Düseneinrichtung (7) aufweist.

3. Portalwaschanlage nach Anspruch 1 oder 2, **dadurch gekennzeichnet, dass** die mindestens eine seitliche Hochdruckwasser-Düsenrichtung (7) mehrere, beispielsweise vier, oszillierende Hochdruck-Punktstrahldüsen (10) aufweist, vorzugsweise in vertikaler Richtung relativ zu dem Portalrahmen (2) in Reihe angeordnete Hochdruck-Punktstrahldüsen (10).

4. Portalwaschanlage nach Anspruch 3, **dadurch gekennzeichnet, dass** die einzelnen Hochdruck-Punktstrahldüsen (10) jeder seitlichen Hochdruckwasser-Düseneinrichtung (7) gleichmäßig voneinander beabstandet sind, beispielsweise mit einem Abstand zwischen 20-25 cm, insbesondere 22,5 cm.

5. Portalwaschanlage nach Anspruch 3 oder 4, **dadurch gekennzeichnet, dass** die einzelnen Hochdruck-Punktstrahldüsen (10) jeder seitlichen Hochdruckwasser-Düseneinrichtung (7) jeweils mit einem vorbestimmten Arbeitsdruck, beispielsweise zwischen 10-30 bar oder zwischen 50-60 bar, betreibbar sind.

6. Portalwaschanlage nach wenigstens einem der Ansprüche 3 bis 5, **dadurch gekennzeichnet, dass** die einzelnen Hochdruck-Punktstrahldüsen (10) jeder seitlichen Hochdruckwasser-Düseneinrichtung (7) jeweils mit einem Gesamtschwenkwinkel zwischen in etwa 20-30°, insbesondere 26°, oszillierend betreibbar sind.

7. Portalwaschanlage nach wenigstens einem der Ansprüche 3 bis 6, **dadurch gekennzeichnet, dass** die einzelnen Hochdruck-Punktstrahldüsen (10) jeder seitlichen Hochdruckwasser-Düseneinrichtung (7) jeweils mit einer Oszillationsfrequenz von in etwa 1-3 Hz, insbesondere in etwa 2 Hz, betreibbar sind.

8. Portalwaschanlage nach wenigstens einem der Ansprüche 3 bis 7, **dadurch gekennzeichnet, dass** die Hochdruck-Punktstrahldüsen (10) jeder seitlichen Hochdruckwasser-Düseneinrichtung (7) jeweils paarweise auf einer entsprechend ansteuerbaren Schwenkeinrichtung (11) vorgesehen sind.

9. Portalwaschanlage nach wenigstens einem der Ansprüche 3 bis 8, **dadurch gekennzeichnet, dass** die Hochdruck-Punktstrahldüsen (10) jeder seitlichen Hochdruckwasser-Düseneinrichtung (7) alle zusammen oder zumindest paarweise synchron verschwenkbar vorgesehen sind.

10. Portalwaschanlage nach wenigstens einem der vorhergehenden Ansprüche, **dadurch gekennzeichnet, dass** das Gehäuse länglich und in etwa rechteckigförmig ausgebildet ist und die einzelnen Komponenten der seitlichen Hochdruckwasser-Düseneinrichtung (7) in geschützter Weise aufnimmt.

11. Portalwaschanlage nach wenigstens einem der vorhergehenden Ansprüche, **dadurch gekennzeichnet, dass** die Zuleitungen für die mindestens eine seitliche Hochdruckwasser-Düseneinrichtung jeweils in dem zugeordneten Horizontalsteg (8) vorgesehen sind.

12. Portalwaschanlage nach wenigstens einem der Ansprüche 3 bis 11, **dadurch gekennzeichnet, dass** die Hochdruck-Punktstrahldüsen (10) derart in dem Gehäuse angeordnet und ansteuerbar sind, dass ein vorbestimmter Auftreffbereich des zu waschenden Fahrzeugs (6) vollständig abgedeckt ist.

13. Portalwaschanlage nach wenigstens einem der vorhergehenden Ansprüche, **dadurch gekennzeichnet, dass** die mindestens eine Hochdruckwasser-Düseneinrichtung (7) derart seitlich an dem Portalrahmen (2) angebracht ist, dass ein Öffnen der Türen des zu waschenden Fahrzeuges (6) nicht behindert wird, wenn sich der Portalrahmen (2) in der Ausgangs-/Endposition befindet.

14. Portalwaschanlage nach wenigstens einem der vorhergehenden Ansprüche, **dadurch gekennzeichnet, dass** in der mindestens einen seitlichen Hochdruckwasser-Düseneinrichtung (7) zusätzlich mindestens eine Düse zum Aufbringen eines Detergentienfluides, mindestens eine Lufttrocknungsdüse und/oder eine andere Fahrzeugbehandlungsdüse vorgesehen ist.

15. Portalwaschanlage nach wenigstens einem der Ansprüche 3 bis 14, **dadurch gekennzeichnet, dass** die Hochdruck-Punktstrahldüsen (10) jeder seitlichen Hochdruckwasser-Düseneinrichtung (7) zusätzlich zum Aufbringen eines weiteren Fahrzeugbehandlungsmittels und/oder zusätzlich als Lufttrocknungsdüsen ausgebildet sind.
